Europäisches Patentamt

European Patent Office

Office européen des brevets

(19)

(11) Numéro de publication: **0 206 949**
**B1**

(12) **FASCICULE DE BREVET EUROPEEN**

(45) Date de publication du fascicule du brevet:
21.03.90

(51) Int. Cl.⁴: **F16K 15/20, B60C 29/00**

(21) Numéro de dépôt: 86420120.7

(22) Date de dépôt: 07.05.86

(54) Valve.

(30) Priorité: 28.05.85 FR 8508289

(43) Date de publication de la demande:
30.12.86 Bulletin 86/52

(45) Mention de la délivrance du brevet:
21.03.90 Bulletin 90/12

(84) Etats contractants désignés:
AT BE CH DE GB IT LI LU NL SE

(56) Documents cités:
DE-B- 2 053 168
US-A- 1 777 385
US-A- 3 480 035

(73) Titulaire: SCHRADER S.A., 48, rue de Salins,
F-25300 Pontarlier(FR)

(72) Inventeur: Maire, Guy, 1, rue Clos Raguin,
F-25300 Sainte-Colombe(FR)

(74) Mandataire: Moinas, Michel, Cabinet Michel
Moinas 13 Chemin du Levant,
F-01210 Ferney-Voltaire(FR)

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rappporte à une valve de chambre à air pour pneumatiques, qui se présente en deux parties distinctes accouplables à tout moment, notamment au moment du montage dans le pneumatique.

Comme on le voit sur la figure A, dont la partie gauche A1 est une vue en coupe tandis que la partie droite A2 est une vue non coupée, une valve classique comprend une tubulure de base 1 et un pied 2 venant par exemple prendre place sur une chambre à air. La tubulure 1 se prolonge vers le haut et reçoit une tubulure interne 3 comprenant le mécanisme de valve.

Ce mécanisme comprend, entre autres choses, une tige 4 de valve comprenant à l'une de ses extrémités un epaulement 5 recevant un joint 6 faisant l'étanchéité. A l'autre extrémité se trouve l'écrou 7 qui maintient l'ensemble en place.

Une valve classique se présente donc en une seule partie, et est normalement déjà installée sur la chambre à air. Du coup, cette chambre à air est difficile à vider totalement de son air, en vue du conditionnement pour la livraison, dans des emballages qu'on veut aussi compacts que possible.

On connaît une valve divulguée dans l'exposé US-A 1 777 385 en plusieurs parties distinctes comme décrite dans la première partie de la revendication 1 comprenant une tubulure de base avec un siège de valve, un tubulure interne fixée dans la tubulure de base mais pouvant être désolidarisée et une tige de valve avec un épaulement et un joint unique. Toutefois, deux organes distincts concourent à l'étanchéité de valve: d'une part une étanchéité de clapet assurée par un contact métal/métal entre une tête supérieure de joint et une partie inférieure de tube, d'autre part une étanchéité mécanisme/valve par un contact métal/caoutchouc entre le joint et le bossage de la tubulure de base.

La présente invention résoud précisément cette difficulté en proposant une valve dont l'étanchéité est assurée par un organe unique et qui se présente en deux parties distinctes, ces deux parties pouvant être assujetties l'une à l'autre à tout moment, en particulier lors du montage dans le pneumatique.

Lorsque la valve est fixée sur la chambre à air pour pneumatiques ou boyaux et en cas de fuite au clapet, la valve classique n'est pas réparable et l'ensemble doit être remplacé. Avec une valve en deux parties selon l'invention, il est possible de changer la partie supérieure appelée mécanisme.

La valve se présente comme décrite dans la revendication 1 en plusieurs parties distinctes avec une tubulure de base avec un siège de valve et une tubulure interne fixée dans la tubulure de base et pouvant être désolidarisée à nouveau. La valve comprend de plus une tige de valve avec un épaulement et un joint unique se logeant sur la tige. L'étanchéité de l'ensemble de valve est assurée par le joint unique étant déformable sous l'effet de pression et ainsi s'appuyant sur le siège et l'épaulement. Le siège de valve est un bossage annulaire sur la paroi interne de la tubulure de base. La tubulure interne comprend une partie chanfreinée voisine du bossage. Le joint unique prend appui sous l'effet de pression contre la partie chanfreinée, le bossage et l'épaulement.

L'assujettissement des deux parties l'une à l'autre peut être réalisé par encliquetage, ou bien par vissage.

Bien que présentée et illustrée dans le cadre d'un pneumatique à chambre à air, l'invention s'applique aussi bien à des valves pour pneumatiques sans chambre à air ou "tubeless".

L'invention sera mieux comprise en référence au dessin annexé, donné à titre d'exemple non limitatif. Dans ce dessin:

— la figure 1 est une vue de la valve selon l'invention, divisée en 1A à gauche (coupe) et 1B à droite (vue non coupée), et

— la figure 2 est une vue de détail correspondant à la figure 1, au niveau du joint faisant l'étanchéité; la partie gauche 2X représente la position clapet fermé, tandis que la partie droite 2Y représente la position clapet ouvert.

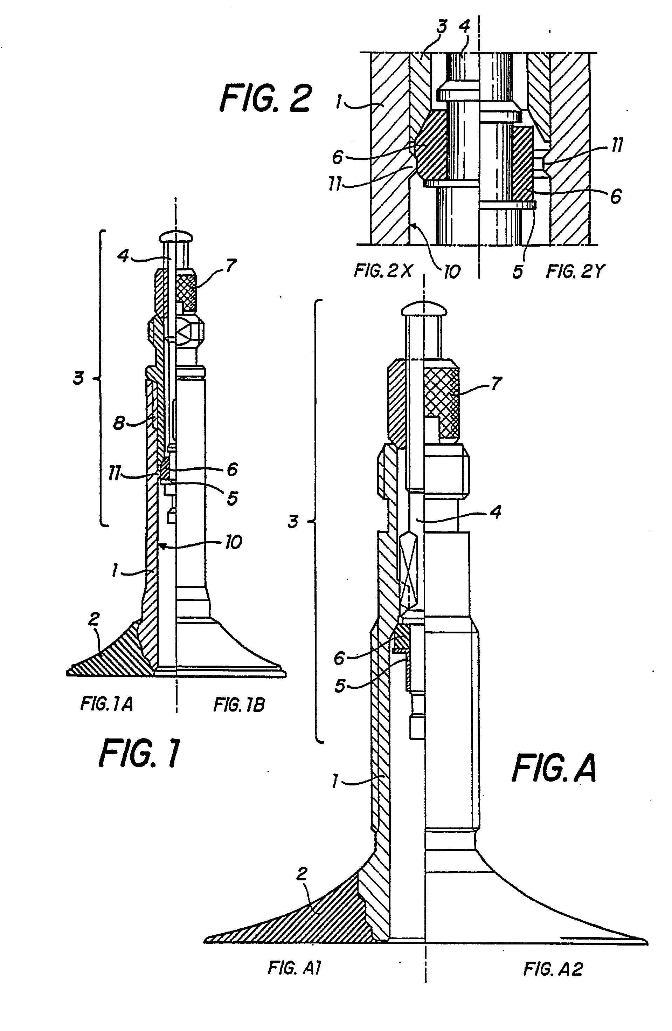

Comme on le voit sur la figure 1, la valve selon l'invention comprend une tubulure de base 1 avec son pied 2, et un mécanisme de valve inclus dans une tubulure interne 3. Ce mécanisme comprend une tige 4 de valve, un épaulement 5 de clapet et un écrou 7 en position supérieure.

La tubulure interne 3 vient s'assujettir dans la tubulure de base 1 au moyen d'un pas de vis 8, tubulure qui comprend une partie filetée à cet effet. L'étanchéité est assurée par un joint unique 6, qui fait à la fois étanchéité de clapet et entre la tubulure de base 1 et la tubulure interne 3. Pour ce faire, ce joint 6, sous l'effet de la pression, prend appui contre un bossage 11 ménagé sur la paroi interne 10 de la tubulure 1, contre une partie chanfreineé de la tubulure interne 3 proche du bossage 11 et contre l'épaulement 5.

Tout ceci est illustré plus en détail sur la figure 2, position clapet fermé (2X) et clapet ouvert (2Y). On voit très précisément comment le joint 6 s'appuie sur le bossage 11 pour bloquer toute sortie d'air, à la fois au niveau du clapet et à la jonction entre les deux tubulures 1, 3 qui ont été solidarisées.

A l'ouverture du clapet, ce joint 6 se détend en créant une ouverture par laquelle l'air peut s'échapper, l'étanchéité entre les deux tubulures 1, 3 n'ayant plus, dans cette position, aucune importance. En relâchant la pression sur le clapet, on se retrouve dans la position de la figure 2X.

On comprendra aisément les avantages de la valve selon l'invention, dont les deux tubulures peuvent être livrées dans le même emballage, mais séparément. La seule opération restant à l'utilisateur montant son pneumatique est d'assujettir la tubulure interne 3 dans la tubulure de base 1 fixée, par exemple, sur la chambre à air. En outre, la partie supérieure peut être changée séparément, en cas de défectuosité.

## Revendications

1. Valve se présentant en plusieurs parties distinctes comprenant une tubulure de base (1) avec un siège de valve, une tubulure interne (3) fixée dans ladite tubulure de base (1) et pouvant être désolidarisée à nouveau, une tige (4) de valve avec un épaulement (5) et un joint unique (6) se logeant sur ladite tige (4), l'étanchéité de l'ensemble de valve étant assurée par ledit joint unique étant déformable sous l'effet de pression et ainsi s'appuyant sur ledit siège et ledit épaulement (5), caractérisée en ce que ledit siège de valve est un bossage (11) annulaire sur la paroi interne de ladite tubulure de base (1), en ce que ladite tubulure interne (3) comprend une partie chanfreinée voisine dudit bossage (11), et en ce que ledit joint unique sous s'effet de pression prenant appui contre ladite partie chanfreinée, ledit bossage (11) et ledit épaulement.

2. Valve selon la revendication 1 caractérisée en ce que l'assujettissement de la tubulure de base (1) et de la tubulure interne (3) est réalisé au moment du montage du pneumatique sur la jante de roue.

3. Valve selon la revendication 1 caractérisée en ce que l'assujettissement de la tubulure de base (1) et de la tubulure interne (3) est réalisé par encliquetage.

4. Valve selon la revendication 1, caractérisée en ce que l'assujettissement de la tubulure de base (1) et de la tubulure interne (3) est réalisé par vissage.

5. Utilisation d'une valve selon la revendication 1 pour des pneumatiques avec ou sans chambre à air.

**Claims**

1. A valve made up of several discrete parts comprising a support tube (1) with a valve seat, an internal tube (3) removably fixed, in said support tube (1), a valve rod (4) having a shoulder (5), and a single joint (6) lodged on said rod (4), fluid-tightness of the valve assembly being provided by said single joint being deformable under the effect of pressure whereby it comes to bear against said seat and said shoulder (5), characterised in that said valve seat is an annular rim (11) on the inner wall of said support tube (1), said internal tube (3) comprises a chamfered part adjacent said rim (11), and said single joint comes, under the effect of pressure, to bear against said chamfered part, said rim (11) and said shoulder.

2. A valve according to claim 1, characterised in that the support tube (1) and the internal tube (3) can be secured together at the moment when a tyre is fitted on the rim of a wheel.

3. A valve according to claim 1, characterised in that the support tube (1) and the internal tube (3) are secured together by a clip fit.

4. A valve according to claim 1, characterised in that the support tube (1) and the internal tube (3) are secured together by screwing.

5. Use of a valve according to claim 1 for pneumatic tyres with inner tubes or tubeless.

**Patentansprüche**

1. Ventil aus mehreren getrennten Teilen mit einem Grundschaft (1) mit Ventilsitz, mit einem in dem genannten Grundschaft (1) befestigten und wieder getrennt werden könnenden Innenschaft (3), mit einer Ventilstange (4) mit Vorsprung (5) und mit einer auf der genannten Stange (4) gelagerten Dichtung (6), wobei die Dichtheit der Ventileinheit durch die genannte Dichtung gewährleistet wird, welche unter Druckeinwirkung verformbar ist und sich dadurch auf den genannten Sitz und den genannten Vorsprung (5) stützt, dadurch gekennzeichnet, daß der genannte Ventilsitz ein Ringwulst (11) auf der Innenwand des genannten Grundschaftes (1) ist, daß der genannte Innenschaft (3) einen in der Nähe des genannten Wulstes (11) liegenden angefasten Teil aufweist und daß sich die genannte Dichtung unter Druckeinwirkung auf den genannten angefasten Teil, den genannten Wulst (11) und den genannten Vorsprung stützt.

2. Ventil gemäß Anspruch 1, dadurch gekennzeichnet, daß die Fixierung des Grundschaftes (1) und des Innenschaftes (3) zum Zeitpunkt der Montage des Reifens auf der Radfelge erfolgt.

3. Ventil gemäß Anspruch 1, dadurch gekennzeichnet, daß die Fixierung des Grundschaftes (1) und des Innenschaftes (3) durch Einrasten erfolgt.

4. Ventil gemäß Anspruch 1, dadurch gekennzeichnet, daß die Fixierung des Grundschaftes (1) und des Innenschaftes (3) durch Verschrauben erfolgt.

5. Verwendung eines Ventils gemäß Anspruch 1 für Reifen mit oder ohne Luftschlauch.

EP 0 206 949 B1

*FIG. 2*

FIG. 2X   FIG. 2Y

*FIG. 1*

FIG.1A   FIG.1B

*FIG. A*

FIG. A1   FIG. A2